# EUROPEAN PATENT APPLICATION

(11) **EP 3 726 722 A1**
(43) Date of publication of application: **21.10.2020**
(21) Application number: 19170102.8
(22) Date of filing: 18.04.2019
(51) Int. Cl.: H02M 7/487, H02M 7/483

(54) **INTERLEAVED POWER CONVERTER**

(71) Applicant: Siemens Aktiengesellschaft, 80333 München (DE)
(72) Inventor: Robinson, Jonathan, 90419 Nürnberg (DE); Mondal, Gopal, 91058 Erlangen (DE); Neumeister, Matthias, 90469 Nürnberg (DE)

(57) **Abstract**

Interleaved power converter for conversion between AC and DC current comprising one or more phase sub-circuits comprising:
- an upper and lower DC terminal to connect to a DC link voltage,
- an upper semiconductor component connecting the upper DC terminal to a first node,
- a lower semiconductor component connecting the lower DC terminal to a second node,
- two or more interleaved half-bridge components arranged in parallel and connecting the first and second node, wherein the half-bridge components each comprise one half-bridge or two or more half-bridges connected in series,
- an inductance for each of the half-bridges, connected to the midpoint of the half-bridges with a first terminal, the second terminals of the inductances being interconnected and forming an AC terminal of the sub-circuit.

## Description

The present invention relates to a single or multi-phase interleaved power converter.

DC to AC or AC to DC power converters are used to connect DC networks such as photovoltaic (PV) panels or battery storage systems to AC networks such as the utility grid. At least two such power converters can be connected across a DC link to form an AC to AC converter e.g. for supplying an electrical motor.

Inductive elements, i.e. conductors may be used in power converters for filtering the AC voltage signal. Both differential mode noise, created from circulating current and common mode noise are points of consideration when an inductor for a converter is built. While the bulk and weight of inductive and capacitive elements depends on the specific converter parameters it is typical for these elements to make up a considerable part of the overall weight and size of a converter.

Interleaved power converters offer the possibility to reduce the volume and weight of the inductive components. In interleaved power converters parts of the converter are doubled or tripled and electrically connected in parallel. The switches used in the multiplied parts are controlled to switch in a similar manner but with a phase shift between the multiplied parts. The inductive components may then be advantageously coupled so that the primary current partly cancels out, reducing the required size of the inductive components.

US 2016/0329832 A1 discloses a multi-level interleaved power converter using an NPC (neutral point clamped) topology. While utilizing the advantages of a multi-level converter and of an interleaved converter this setup requires 54 semiconductor components for a three phase, three level, three interleaved cell setup.

The objective of the present invention is to provide an interleaved power converter with improved performance.

An interleaved power converter for conversion between AC and DC current in accordance with the invention comprises one or more phase sub-circuits. Each of those sub-circuits in turn comprises an upper and lower DC terminal to connect to a DC link voltage, an upper semiconductor component connecting the upper DC terminal to a first node and a lower semiconductor component connecting the lower DC terminal to a second node.

The power converter further comprises two or more interleaved half-bridge components arranged in parallel and connecting the first and second node, wherein the half-bridge components each comprise one half-bridge or two or more half-bridges connected in series. An inductance for each of the half-bridges is connected to the midpoint of the half-bridges with a first terminal, the second terminals of the inductances being interconnected and forming an AC terminal of the sub-circuit.

The interleaved power converter according to the invention uses more semiconductor components than a simpler two-level interleaved converter topology but has the advantage that it can be used with higher DC bus voltages. In addition, for the same switching frequency the additional levels result in lower voltage and current harmonics and a lower circulating current. Reduced harmonics imply that the filter inductors can be made smaller, saving space and weight. The lower circulating current implies reduced losses in the semiconductor components and filter inductors.

In comparison to a multi-level topology such as the one disclosed in US 2016/0329832 A1 the present interleaved power converter has a lower semiconductor device count, leading to a simplification of the design and a reduction of the electronics necessary to operate the semiconductor switches.

Further features that may be added alone or together in exemplary embodiments of the invention include:
- The power converter may comprise a converter element connecting the first and second node, the converter element comprising one of: a capacitor, a series of two switches or a series of two diodes.
- The DC link voltage may have a middle potential point and the converter element may comprise a series of two switches or two diodes, wherein the midpoint between the switches or diodes, respectively, is connected to the middle potential point. With this setup the power converter uses a three-level neutral point clamped (NPC) topology. When the converter element uses two switches, the topology is an active NPC topology.
- The converter element may comprise a capacitor without a connection to a middle potential point. With this setup the interleaved converter uses a flying capacitor topology.
- The sub-circuit of the interleaved power converter may have exactly three interleaved half-bridge components. In an alternative embodiment, the sub-circuit may comprise exactly two half-bridge components.
- The sub-circuit may further comprise a series of a first and second DC link capacitor connecting the upper and lower DC terminal. This series of capacitors provides a middle potential point for
- The upper and/or lower semiconductor components may be an upper and/or lower controllable switch. With switches the interleaved power converter allows bi-directional operation.
- The upper and/or lower switch may be selected to have a current rating which is at least three times the current rating of the switches of the interleaved half-bridges. With such components the upper and/or lower semiconductor component may be implemented as a single switch allowing for a simple and space-saving setup.
- Alternatively, the upper and/or lower switch may comprise three semiconductor switches connected in parallel and arranged to be switched with the same frequency and phase. This allows using the same switches for the interleaved half-bridges and for the upper and lower semiconductor components. Using common control signals for the parallel switches reduces the necessary amount of electronics for the converter.
- The outer switching frequency used for switching the upper and/or lower switch may be lower than the inner frequency used for switching the semiconductor switches of the interleaved half-bridges. The outer frequency may be the frequency of the utility grid, particularly 50 Hz or 60 Hz. Using such a comparatively low frequency for switching reduces the switching losses substantially leaving mainly conduction losses in these devices. This in turn allows selecting the upper and/or lower switch to have low conduction losses reducing the losses in the device and therefore reducing the necessary investment in cooling ability for the converter.
- The upper and/or lower semiconductor components may be diodes. With this setup the interleaved power converter is limited to rectifier operation but the conduction losses of the diodes are substantially smaller than the conduction losses of switches allowing for a very efficient system with advantages in volume and weight.
- The sub-circuit may comprise two middle DC terminals to connect to middle DC link potential points and the half-bridge components may each comprise two stacked half-bridges connecting the first and second node and two pairs of stacked diodes wherein the middle of each pair of stacked diodes is connected to one of the middle DC terminals. In this way a four-level topology is created.
- A three phase interleaved power converter may be formed by using exactly three phase sub-circuits.

Embodiments of the present invention are now described with reference to the accompanying drawings to which the invention is not limited. The illustrations of the drawings are in schematic form. It is noted that in different figures, similar or identical elements use the same reference signs.
Fig. 1 illustrates an embodiment of a single phase three level interleaved power converter.
Fig. 2 illustrates an embodiment of a three phase three level interleaved power converter.
Fig. 3 shows a simulated voltage and current behavior of a three level interleaved power converter in comparison to a two-level interleaved power converter.
Fig. 4 illustrates an embodiment of a single phase three level flying capacitor interleaved power converter.
Fig. 5 illustrates an embodiment of a single phase three level interleaved power converter with an active NPC topology.
Fig. 6 illustrates an embodiment of a single phase four level interleaved power converter.

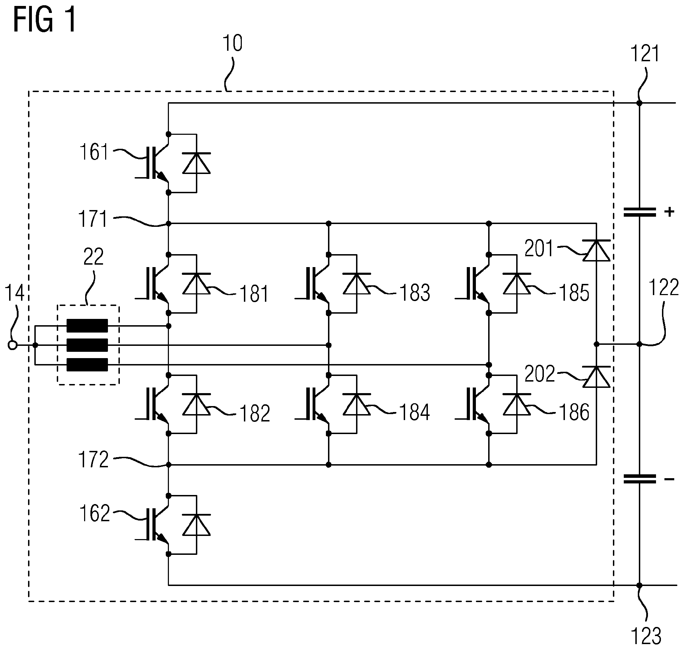

Fig. 1 illustrates a first embodiment of the invention. A single phase three level interleaved power converter according to Fig. 1 comprises an upper, a middle and a lower DC terminal 121...123 suitable for connection to a DC link voltage with a middle potential point. An appropriate DC link is shown in Fig. 1 including an upper and lower potential and a series connection of two capacitors between the upper and lower potential providing a middle potential point.

The interleaved power converter further comprises an AC terminal 14 for connection to a single phase AC network or one line of a three-phase AC network such as a utility grid.

The AC terminal 14 and the DC terminals 121...123 are connected by a phase sub-circuit 10 of the interleaved power converter. This phase sub-circuit 10 comprises an upper switch 161 connecting the upper DC terminal 121 to a first node 171 of the phase sub-circuit 10. It further comprises a lower switch 162 connecting the lower DC terminal 123 to a second node 172 of the phase sub-circuit 10.

The phase sub-circuit 10 further comprises three interleaved half-bridges arranged in parallel and connecting the first and second node 171, 172. The half-bridges each comprise a series of two semiconductor switches 181...186. The midpoint of each of the three interleaved half-bridges is connected to a first terminal of an inductive element 22 that is assigned to that interleaved half-bridge. The second terminals of the three inductive elements 22 are interconnected and form the AC terminal 14.

The interleaved power converter further comprises a series of two diodes 201, 202 which is connected in parallel to the interleaved half-bridges and therefore also connects the first node 171 and the second node 172. The diodes 201, 202 are arranged to allow current flow from the second node 172 to the first node 171. The midpoint between the diodes 201, 202 is connected to the middle DC terminal 122 and therefore to the middle potential point of the DC link.

In the present embodiment of the invention the upper and lower switch 161, 162 are chosen to have a current rating of at least three times the current rating of the semiconductor switches 181...186 of the interleaved half-bridges to enable the upper and lower switch 161, 162 and the interleaved half-bridges to handle the same amount of current. In other embodiments the upper and lower switch 161, 162 may be implemented by three parallel semiconductor switches with substantially the same current rating as the semiconductor switches 181...186. In those embodiments the three parallel semiconductor switches use the same gate signal for their switching activities making them act as one switch.

All switches 161, 162, 181...186 of the interleaved power converter are controlled by a control circuit which is not depicted in Fig. 1. The control circuit provides signals to the gate terminals which implement the function as a power converter and specifically as an interleaved power converter. For the interleaved half-bridges the switches 181...186 are controlled to switch in an analogous fashion but with a phase shift between the interleaved half-bridges thus implementing an interleaved switching mode.

In the embodiment of Fig. 1 the upper and lower switch 161, 162 use the grid frequency as their switching frequency, i.e. 50 Hz. Therefore, the electrical losses occurring those switches 161, 162 will be mainly conduction losses. Therefore, the upper and lower switch 161, 162 are advantageously selected to have low conduction losses.

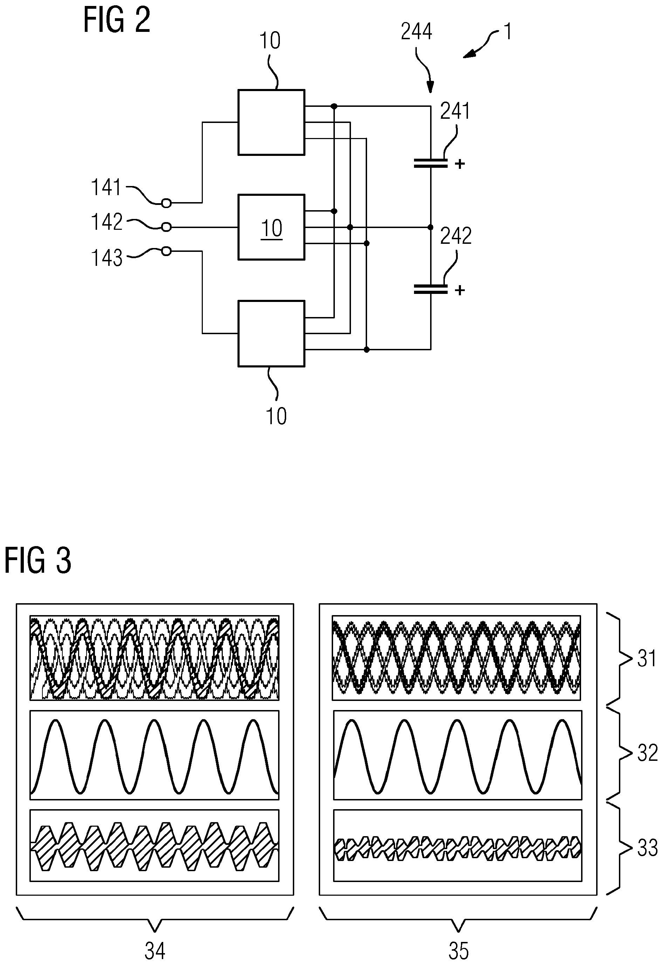

The phase sub-circuit 10 shown in Fig. 1 may be used to construct a three phase interleaved converter 1 which is shown in Fig. 2. The three phase interleaved converter 1 of Fig. 2 comprises three phase sub-circuits 10. The individual AC terminals 14 of the three phase sub-circuits 10 form the AC terminals 141...143 of the three phase interleaved converter 1.

The three phase interleaved converter 1 further comprises a DC link 244 with two capacitors 241, 242 arranged in a series connection. The DC link 244 thus offers a middle potential point in addition to the upper and lower DC voltage level. The three voltage levels provided by the DC link 244 are connected to the three DC terminals 121...123 of each of the phase sub-circuits 10.

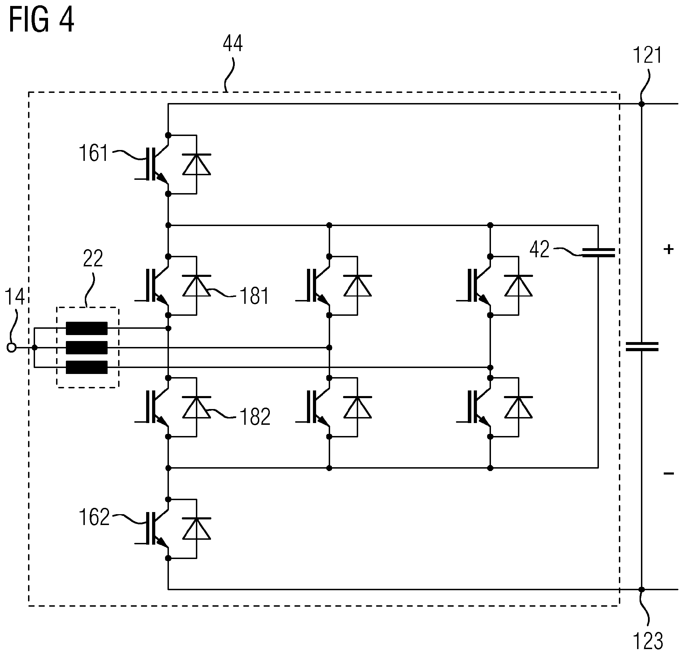

The three phase interleaved converter 1 of Fig. 2 uses a phase sub-circuit 10 from the embodiment of Fig. 1. In other embodiments the three phase interleaved converter 1 may use different phase sub-circuits such as those found in the embodiments of Figs. 4 to 6.

Fig. 3 shows the simulated voltage and current behavior of a three level interleaved power converter in comparison to a two-level interleaved power converter. The graphs of panel 34 show the behavior of a two-level interleaved power converter. The graphs of panel 35 show the behavior of a three level interleaved power converter of an embodiment of the invention. The upper graphs 31 show the converter AC voltages, the middle graph 32 shows the currents in each interleaved winding and the lower graphs 33 show the circulating current. The simulated graphs 31...33 show that the three level interleaved power converter produces lower circulating currents and lower harmonics in the AC voltages and currents.

Fig. 4 illustrates an embodiment of a single phase three level flying capacitor interleaved power converter. The embodiment of the invention of Fig. 4 is similar to the embodiment of the invention of Fig. 1. The diodes 201, 202 of the embodiment of Fig. 1 are replaced with a single capacitor in the embodiment according to Fig. 4. Therefore the embodiment of Fig. 4 uses the flying capacitor variant of the neutral point clamped (NPC) topology. The phase sub-circuit 44 of the embodiment of Fig. 4 may be used as a single phase power converter as depicted in Fig. 4 or in the three phase converter of Fig. 2 instead of phase sub-circuit 10.

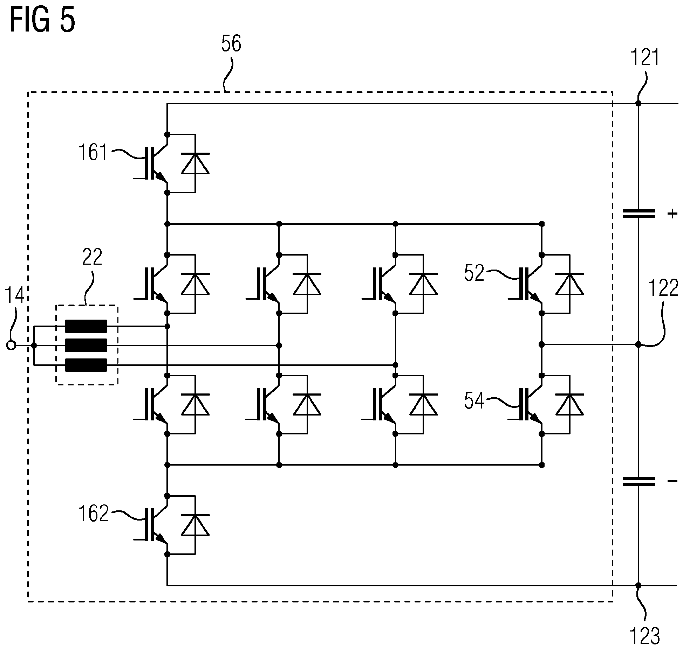

Fig. 5 illustrates an embodiment of a single phase three level interleaved power converter with an active NPC topology. The embodiment of the invention of Fig. 5 is similar to the embodiment of the invention of Fig. 1. The diodes 201, 202 of the embodiment of Fig. 1 are replaced with semiconductor switches 52, 54 connected as a half-bridge between the first node 171 and the second node 172. Therefore the embodiment of Fig. 5 uses an active variant of the neutral point clamped (NPC) topology. The phase sub-circuit 56 of the embodiment of Fig. 5 may be used as a single phase power converter as depicted in Fig. 5 or in the three phase converter of Fig. 2 instead of phase sub-circuit 10.

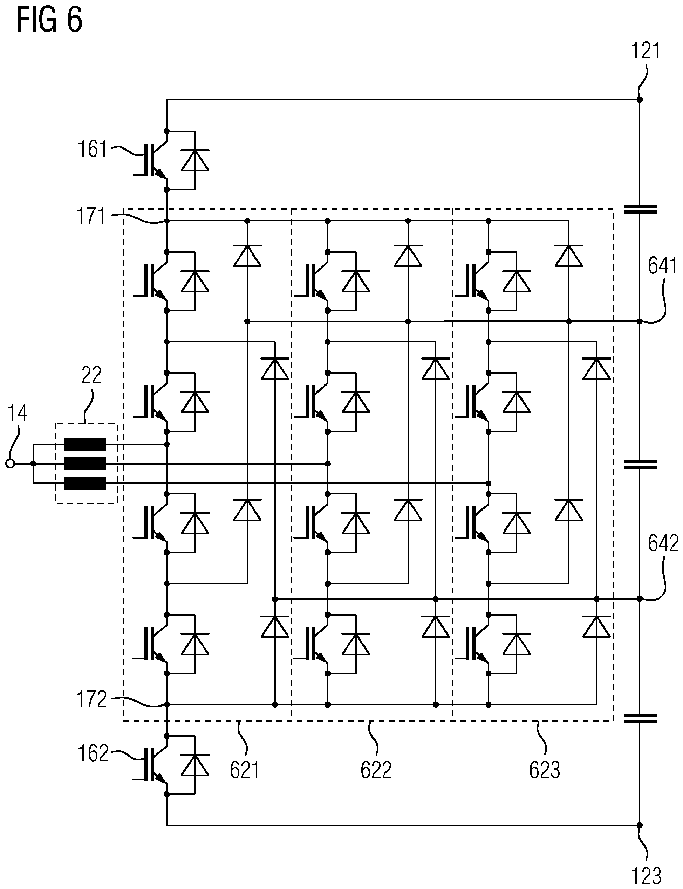

Fig. 6 illustrates an embodiment of the invention in the form of a four level interleaved power converter. The four level converter according to Fig. 6 comprises an upper, two middle and a lower DC terminal 121, 123, 641, 642 suitable for connection to a DC link voltage with two middle potential points, i.e. with four different DC voltages. An appropriate DC link is shown in Fig. 6 including an upper and lower potential and a series connection of three capacitors between the upper and lower potential providing the middle potential points. The four level converter further comprises an AC terminal 14 for connection to a single phase AC network or one line of a three-phase AC network such as a utility grid.

As with the other embodiments the AC terminal 14 and the DC terminals 121...123 are connected by a phase sub-circuit of the four level converter. This phase sub-circuit comprises an upper switch 161 connecting the upper DC terminal 121 to a first node 171 of the phase sub-circuit. It further comprises a lower switch 162 connecting the lower DC terminal 123 to a second node 172 of the phase sub-circuit.

The phase sub-circuit further comprises three interleaved half-bridge components arranged in parallel and connecting the first and second node 171, 172. The half-bridge components each comprise a series of two half-bridges, i.e. four semiconductor switches in a series connection. In addition the half-bridge components each comprise two pairs of two series-connected diodes each. The first pair of diodes connects the first node 171 to the lower connection point between the lower two of the semiconductor switches. The midpoint of the diodes of the first pair is connected to the upper one of the middle DC terminals 641. The second pair of diodes connects the upper connection point between the upper two of the semiconductor switches to the second node 172. The midpoint of the diodes of the second pair is connected to the lower one of the middle DC terminals 642. The midpoint of each of the three interleaved half-bridge components, i.e. the potential point between the two half-bridges, is connected to a first terminal of an inductive element 22 that is assigned to that interleaved half-bridge component. The second terminals of the three inductive elements 22 are interconnected and form the AC terminal 14. As with the other phase sub-circuits shown in the previous figures the phase sub-circuit of Fig. 6 may be used to construct a three phase interleaved converter.

While not shown here it is possible and part of the invention to construct higher level power converters that use the upper and lower switch 161, 162 as outer switches without multiplying these switches for interleaved operation while using an interleaved inner part with multiplied half-bridges which are switched in an interleaved mode. Five, seven, and higherlevel power converters may be constructed accordingly.

All the embodiments shown and discussed use three interleaved half-bridges or half-bridge components. The invention is not limited to this particular number however and two interleaved half-bridges or half-bridge components or four interleaved half-bridges or half-bridge components or any higher number may be used as well. In such embodiments some elements of the power converters can be adapted. For example, the current rating of upper and lower switch or diode 161, 162 would advantageously be adapted to be at least twice the current rating of the inner switches in case two interleaved half-bridges or half-bridge components are used. When four half-bridges or half-bridge components are used, at least four times the current rating is advantageous.

### Reference Numbers

- 10: Phase subcircuit
- 44: Phase subcircuit
- 56: Phase subcircuit
- 121: Upper DC terminal
- 122: Middle DC terminal
- 123: Lower DC terminal
- 14: AC terminal
- 161: Upper switch
- 162: Lower switch
- 181...186: Interleaved half-bridge switches
- 201, 202: NPC diodes
- 22: Inductances
- 31: Converter AC voltages
- 32: Interleaved winding currents
- 33: Circulating current
- 42: Flying capacitor
- 52, 54: Active NPC switches
- 621...623: half-bridge components
- 641, 642: middle DC terminals
- 141...143: AC terminals
- 244: DC link
- 241, 242: DC link capacitors
- 1: Three phase interleaved converter
- 171: First node
- 172: Second node

## Claims

1. Interleaved power converter for conversion between AC and DC current comprising one or more phase sub-circuits (10, 44, 56) comprising:
- an upper and lower DC terminal (121, 123) to connect to a DC link voltage,
- an upper semiconductor component (161) connecting the upper DC terminal (121) to a first node (171),
- a lower semiconductor component (162) connecting the lower DC terminal (123) to a second node (172),
- two or more interleaved half-bridge components (621...623) arranged in parallel and connecting the first and second node (171, 172), wherein the half-bridge components (621...623) each comprise one half-bridge or two or more half-bridges connected in series,
- an inductance (22) for each of the half-bridges, connected to the midpoint of the half-bridges with a first terminal, the second terminals of the inductances (22) being interconnected and forming an AC terminal (14) of the phase sub-circuit (10, 44, 56).

2. The interleaved power converter of claim 1, wherein the half-bridge components (621...623) each comprise a single half-bridge connecting the first and second node (171, 172) and further comprising a converter element (201, 202, 42, 52, 54) connecting the first and second node (171, 172), the converter element (201, 202, 42, 52, 54) comprising one of: a capacitor (42), a series of two switches (52, 54), a series of two diodes (201, 202).

3. The interleaved power converter of claim 2, wherein the DC link voltage has a middle potential point and the converter element (201, 202, 42, 52, 54) comprises a series of two switches (52, 54) or two diodes (201, 202) and wherein the midpoint between the switches or diodes (52, 54, 201, 202), respectively, is connected to the middle DC potential point.

4. The interleaved power converter of any of the preceding claims, comprising exactly three half-bridge components.

5. The interleaved power converter of any one of claims 1 to 3, comprising exactly two half-bridge components.

6. The interleaved power converter of any of the preceding claims, comprising a series of a first and second DC link capacitor (241, 242) connecting the upper and lower DC terminals (121, 123).

7. The interleaved power converter of claim 1, wherein the phase sub-circuit (10, 44, 56) comprises two middle DC terminals (641, 642) to connect to middle DC link potential points and wherein the half-bridge components (621...623) each comprise two stacked half-bridges connecting the first and second node and two pairs of stacked diodes wherein the middle of each pair of stacked diodes is connected to one of the middle DC terminals.

8. The interleaved power converter of any of the preceding claims, wherein the upper and/or lower semiconductor components (161, 162) are controllable switches (161, 162).

9. The interleaved power converter of any of the preceding claims, wherein the upper and/or lower semiconductor components (161, 162) are selected to have a current rating which is at least three times the current rating of the switches (181...186) of the interleaved half-bridges.

10. The interleaved power converter of any of the preceding claims, wherein the upper and/or lower semiconductor components (161, 162) comprise three semiconductor switches connected in parallel and arranged to be switched with the same frequency and phase.

11. The interleaved power converter of any of claims 8 to 10, wherein the outer switching frequency used for switching the upper and/or lower semiconductor components (161, 162) is lower than the inner frequency used for switching the semiconductor switches of the interleaved half-bridges.

12. The interleaved power converter of claim 11, wherein the outer switching frequency is the frequency of the utility grid, particularly 50 Hz or 60 Hz.

13. The interleaved power converter of any of the preceding claims, wherein the upper and/or lower semiconductor components (161, 162) are selected to have low conduction losses.

14. The interleaved power converter of any of claims 1 to 7, wherein the upper and/or lower semiconductor components (161, 162) are diodes.

15. Three phase interleaved power converter, comprising the interleaved power converter of any of the preceding claims, comprising exactly three phase sub-circuits (10, 44, 56).
